# EUROPEAN PATENT SPECIFICATION

(11) **EP 2 504 571 B1**
(45) Date of publication and mention of the grant of the patent: **18.06.2014**
(21) Application number: 10768355.9
(22) Date of filing: 18.10.2010
(51) Int. Cl.: F03D 3/00, F03D 3/02, F03D 11/04

(54) **FLOATING VERTICAL AXIS WIND TURBINE MODULE SYSTEM AND METHOD**
Schwimmendes WINDTURBINENMODULSYSTEM MIT VERTIKALER ACHSE UND VERFAHREN
PROCÉDÉ ET SYSTÈME DE MODULE FLOTTANT DE TURBINE ÉOLIENNE À AXE VERTICAL

(30) Priority: 21.10.2009 US 253562 P
(43) Date of publication of application: 03.10.2012
(73) Proprietor: Technip France, 92400 Courbevoix (FR)
(72) Inventor: HARRIS, Peter Graham, Aberdeen, AB32 6TQ (GB); O'SULLIVAN, James, Houston Texas, 77079 (US)
(74) Representative: Domenego, Bertrand
(86) International application number: PCT/US2010/052998
(87) International publication number: WO 2011/049843

(56) References cited:
- WO-A1-2007/009464
- DE-A1- 3 224 976

## Description

### BACKGROUND OF THE INVENTION

### Field of the Invention.

The disclosure relates generally to a system and method for offshore wind turbines. More specifically, the disclosure relates to a system and method for a floating wind turbine module.

### Description of the Related Art.

The use of offshore wide turbines is becoming an increasingly feasible and desirable form of power generation. A current premise in implementing wind turbines is "the bigger, the better"--the larger the turbine motor, the more power is generated. Thus, massive structures are being and have been built-with the attendant expense. Conventional horizontal wind turbines are the structures 50 meters (m) to 100 m tall and weigh 500 metric tonnes or more, and larger ones may be made in the future.

Typically, wind turbines installed offshore involve the use of cranes to lift the tower, turbine, and turbine blades into position, such as shown in DE 10332383 B4. Offshore crane barges and services can be expensive. When considering multiple turbine units, the multiple lifts, and crane assets deployed, it can add considerable cost to the offshore installation when compared to land-based installation, and therefore affect overall commercial viability of the offshore wind turbine installation.

Further, conventional horizontal axis wind turbines need to be installed at sites large distances apart as the shedding vortices from the rotating blades interferes with the next downwind turbine thus affecting performance and power output. In the offshore environment, this spacing of turbines means large numbers of significantly separated structures are required to construct the overall wind farm, which involves considerable cost. Thus, large numbers of turbines require multiple structures, moorings, interconnecting cables, and so forth--all of which represents considerable expense.

The spaced individualized structures present other less direct challenges. Gaining access to the turbine structure can be difficult, and as the structures are separated, it can take a long time to maintain and repair a wind farm. Multiple arrivals/departures for each of the separated structures increase the danger to personnel. Further, any faulty turbine or other equipment left unrepaired represents a direct loss of revenue.

One proposed solution of fixed and separate wind turbine installations is to aggregate wind turbines on floating structures. For example, EP 1366290B1 discloses an offshore floating wind power generation plant has a single point mooring system (10) fixed to a sea floor, a float in the form of at least an triangle (23a), the float being floated on a surface of sea and moored at an apex of the triangle to the single point mooring system (10), and a wind power generation unit (30) on the float (10).

As another example, US 2001/0002757 discloses windmill generator sets, each including a windmill and a generator driven by the windmill, are installed on a floating body floating on water. The floating body is formed as a triangular truss structure. Each side of the triangle of the floating body is formed by a hollow beam having a rectangular cross section. The windmill generator sets are disposed on the floating body at the respective corners of the triangle. The distance between the centers of windmills, adjacent to each other, is set at a value smaller than four times, preferably smaller than two times, the diameter of the rotors of the windmills. By setting the distance between the centers of the windmills at a value smaller than four times of the rotor diameter, the construction cost of the floating body can be reduced without any accompanying reduction in the power generation efficiency of the windmill generator sets, whereby the unit power generating cost of the plant can be reduced.

One of the challenges is to orient the windmills to an optimal direction relative to the wind even when the wind changes directions. Some systems, such as those referenced above, allow pivoting of the wind generation plant around a single mooring point, or allow the individual rotors on the windmills to rotate around its own tower toward an optimal orientation. The single mooring point can be a structure that is moored (often with multiple lines) as a type of axle about which the floating portion with the wind turbines rotates.

However, the above examples of prior publications do not address a wind energy system that has multiple mooring points that may be preferred for better securing and stability of the system, and still allow the system to be oriented to varying wind directions for optimizing wind energy.

DE 32 24 976 discloses a wind energy system according to the preamble of claim 1.

There remains a need for an improved system and method for a wind energy system with a multipoint mooring system.

### BRIEF SUMMARY OF THE INVENTION

The disclosure provides a wind energy system according to any of claims 1 to 9, with one or more floating modules having at least two vertical wind turbines mounted thereon. A multipoint mooring system couples the floating module to a seabed, the mooring system having at least two mooring points with at least two mooring lines positioned at locations around the floating module with the wind turbines. A rotation system is coupled to the floating module and adapted to twist the floating module relative to wind direction while the multipoint mooring system is coupled between the seabed and the floating module. The rotation system can include induced gyroscopic torque from counter-rotating wind turbines and a self-adjusting induced gyroscopic torque differential from varying wind directions. Other rotation systems can include winches and translating assemblies that can be activated to tighten or loosen mooring lines in the multipoint mooring system coupled to the floating module in a catenary manner.

The disclosure provides a wind energy system, comprising: a floating module adapted to at least partially float in water; at least two vertical wind turbines mounted on the floating module; a multipoint mooring system coupled between a seabed and the floating module having at least two mooring points with mooring lines, the lines being positioned at locations around the floating module having the vertical wind turbines; and a rotation system coupled with the floating module and adapted to twist the floating module relative to wind direction while the multipoint mooring system is coupled between the seabed and the floating module.

The disclosure further provides a method of optimizing wind energy according to any of claims 10 to 15 from a floating platform having at least two vertical wind turbines mounted on the platform with a multipoint mooring system having mooring lines securing the floating platform at a location relative to a seabed. The method may comprise: tightening at least one mooring line of the multipoint mooring system; and twisting an orientation of the floating platform from a first state to a second state by the tightening while the multipoint mooring system is coupled between the seabed and the floating platform.

### BRIEF DESCRIPTION OF THE SEVERAL VIEWS OF THE DRAWINGS

Figure 1 is a top perspective view schematic diagram illustrating an exemplary embodiment of a wind energy system of the present disclosure.
Figure 2 is a top perspective view schematic diagram illustrating the exemplary embodiment of the wind energy system of Figure 1 from a reverse angle.
Figure 3 is a top perspective view schematic diagram illustrating multiple floating modules of an exemplary embodiment of the wind energy system.
Figure 4 is a top perspective view schematic diagram illustrating another exemplary embodiment of the wind energy system.
Figure 5 is a top view schematic diagram of a multipoint mooring system as part of the wind energy system.
Figure 6 is a top view schematic diagram of another embodiment of the multipoint mooring system of the wind energy system.
Figure 7 is a side view schematic diagram of the exemplary multipoint mooring system of the wind energy system.
Figure 8 is a top view schematic diagram of the wind energy system in a neutral first state of orientation with an embodiment of a rotation system having induced gyroscopic torque from the wind turbines.
Figure 8A is a side view schematic diagram of a mooring line in the first state of orientation.
Figure 9 is a top view schematic diagram of the wind energy system twisted to a second state of orientation with the rotation system of

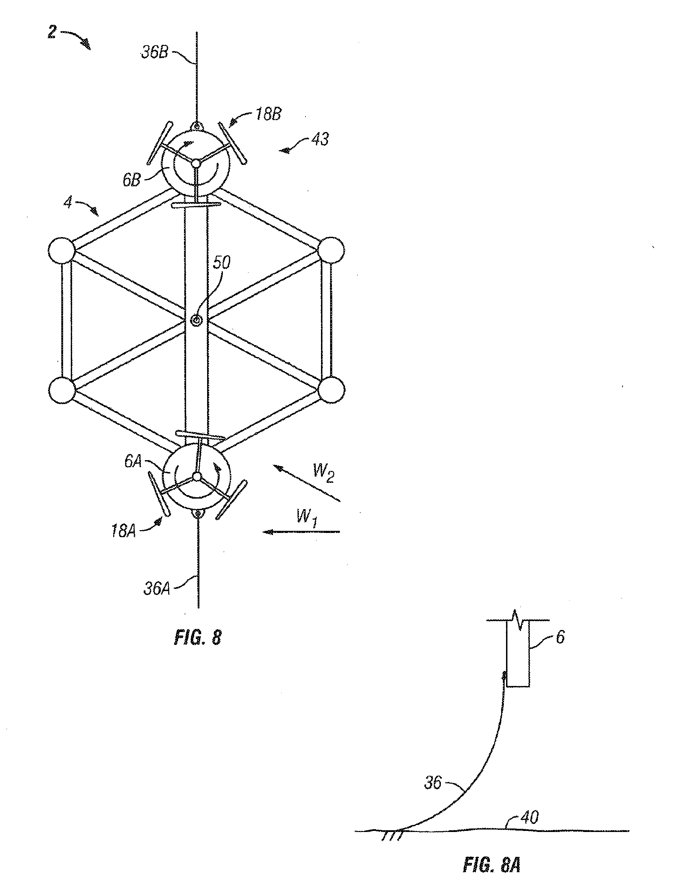

Figure 8 having an induced gyroscopic torque differential from the wind turbines.

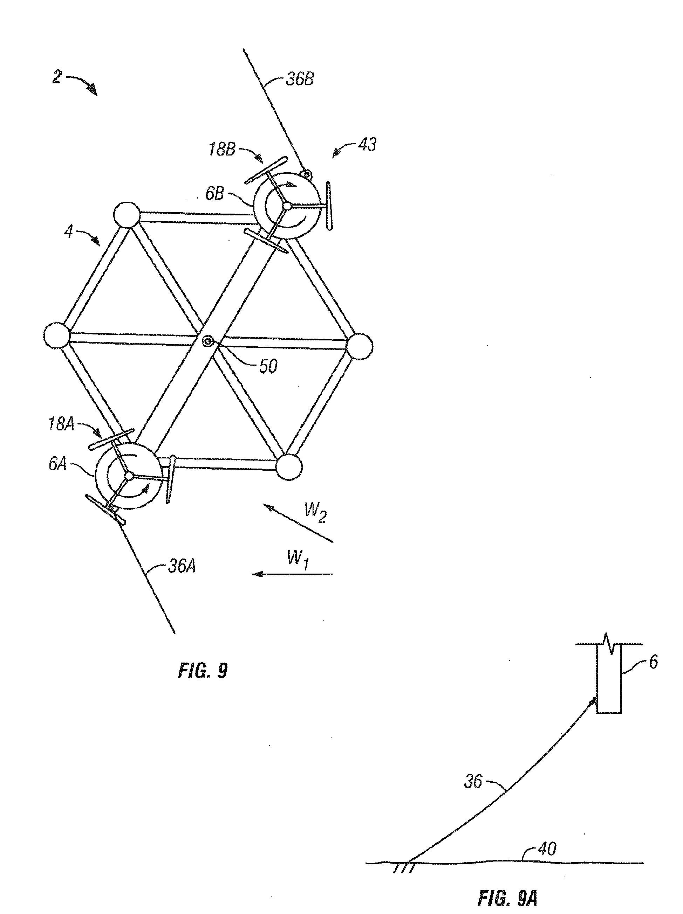

Figure 9A is a side view schematic diagram of a mooring line in the second state of orientation.

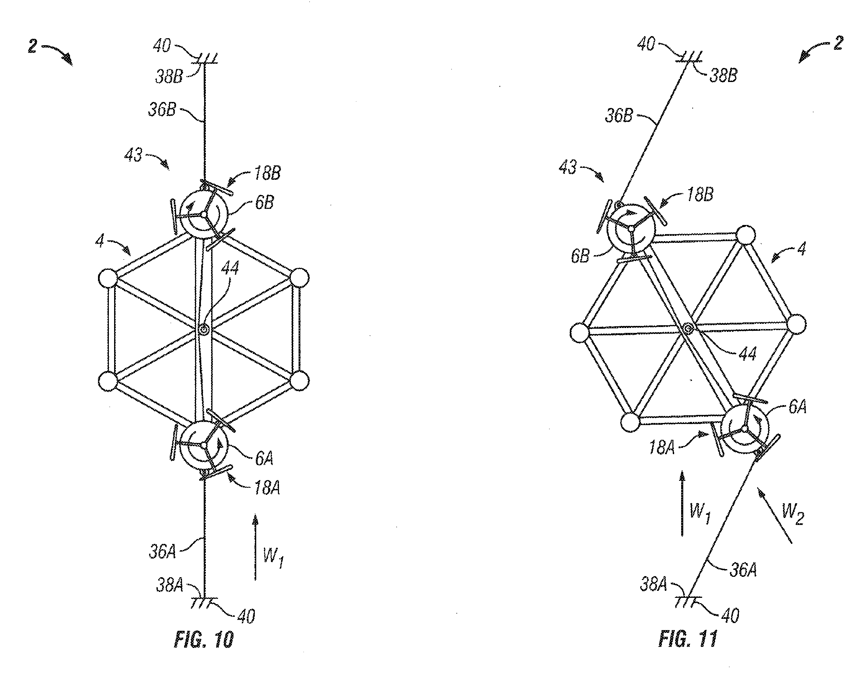

Figure 10 is a top view schematic diagram of the wind energy system in a first state of orientation.
Figure 11 is a top view schematic diagram of the wind energy system in a second state of orientation.

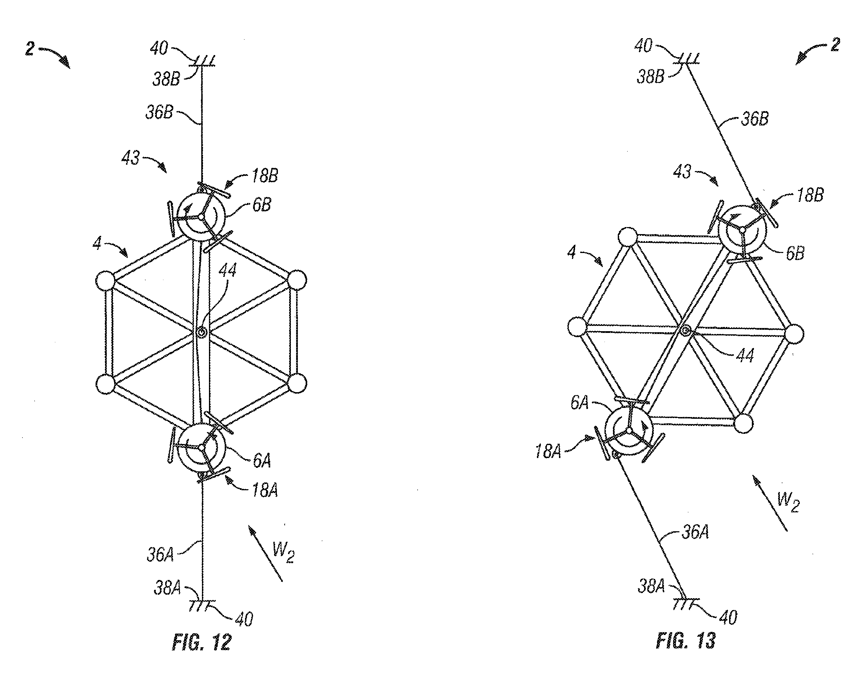

Figure 12 is a top view schematic diagram of the wind energy system in a reset first state of orientation.
Figure 13 is a top view schematic diagram of the wind energy system in a third state of orientation.

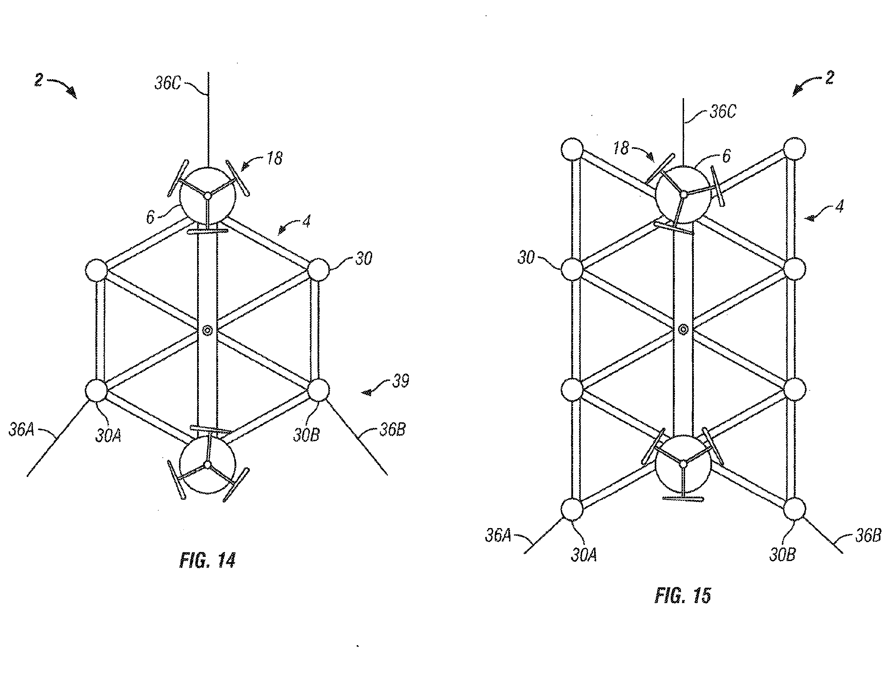

Figure 14 is a top view schematic diagram of another embodiment of a multipoint mooring system of the wind energy system.
Figure 15 is a top view schematic diagram of another embodiment of the multipoint mooring system of the wind energy system.

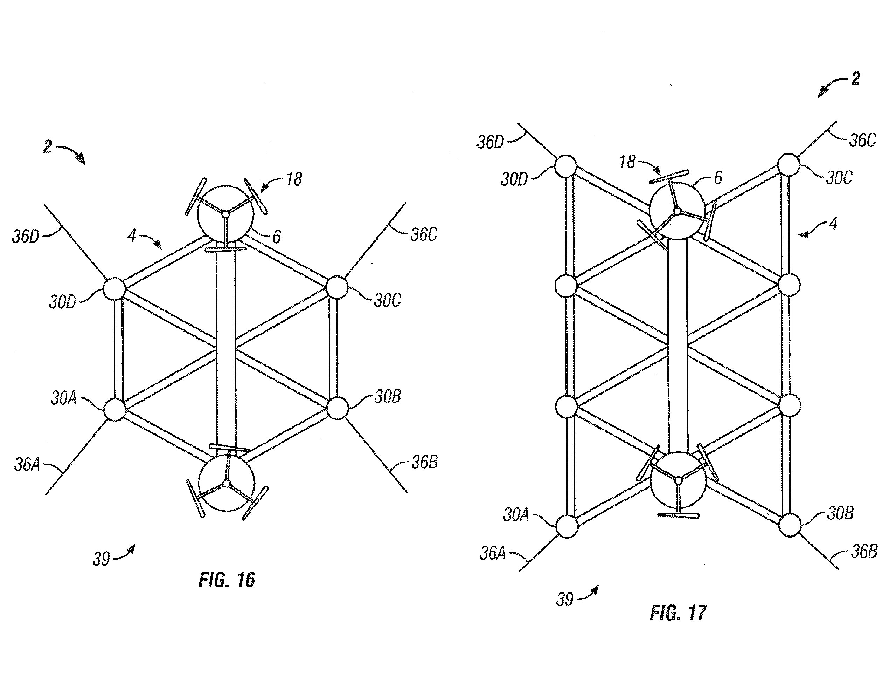

Figure 16 is a top view schematic diagram of a multipoint mooring system of the wind energy system.
Figure 17 is a top view schematic diagram of another embodiment of a multipoint mooring system of the wind energy system.

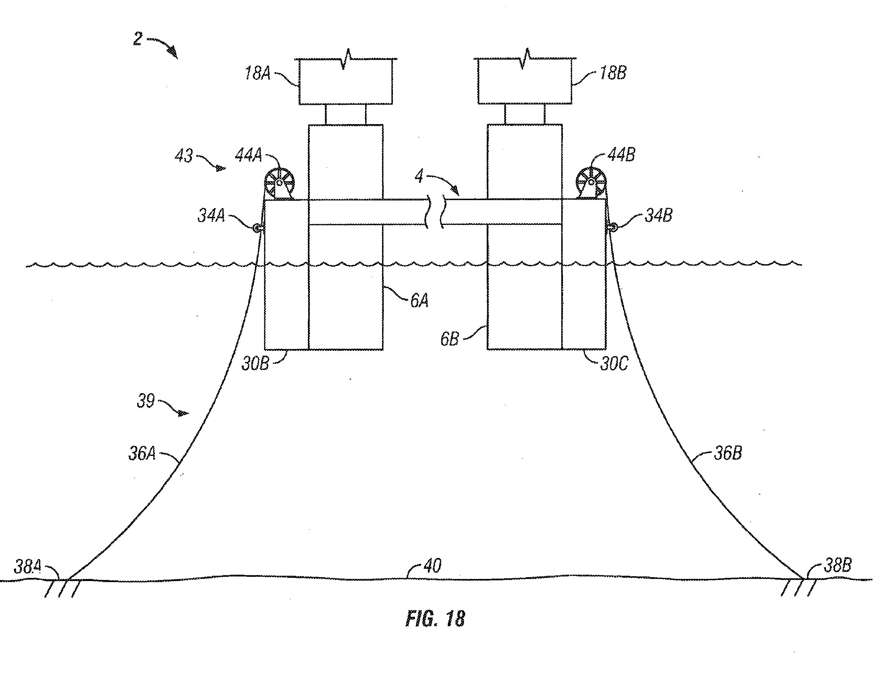

Figure 18 is a side view schematic diagram of a multipoint mooring system of the wind energy system with a rotation system having one or more winches.

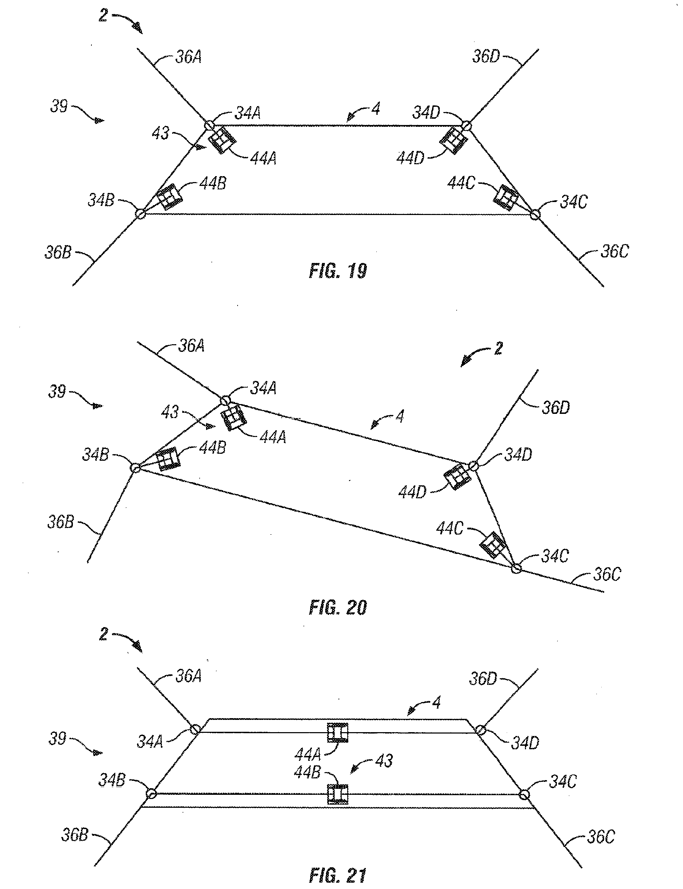

Figure 19 is a top view schematic diagram of the wind energy system in a first state of orientation with the rotation system having at least one winch.
Figure 20 is a top view schematic diagram of the wind energy system twisted to a second state of orientation with the rotation system of Figure 19 having at least one winch.
Figure 21 is a top view schematic diagram of the wind energy system in a first state of orientation with another embodiment of a rotation system having at least one winch.

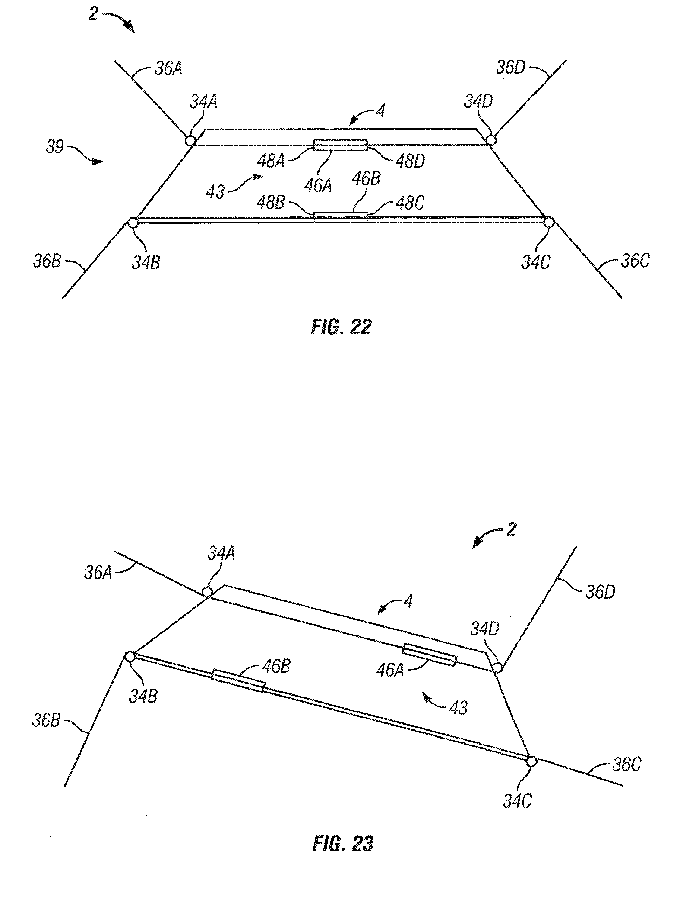

Figure 22 is a top view schematic diagram of the wind energy system in a first state of orientation with another embodiment of a rotation system having at least one translating assembly in a first position.
Figure 23 is a top view schematic diagram of the wind energy system twisted to a second state of orientation with the rotation system of
   Figure 22 having the translating assembly in a second position.

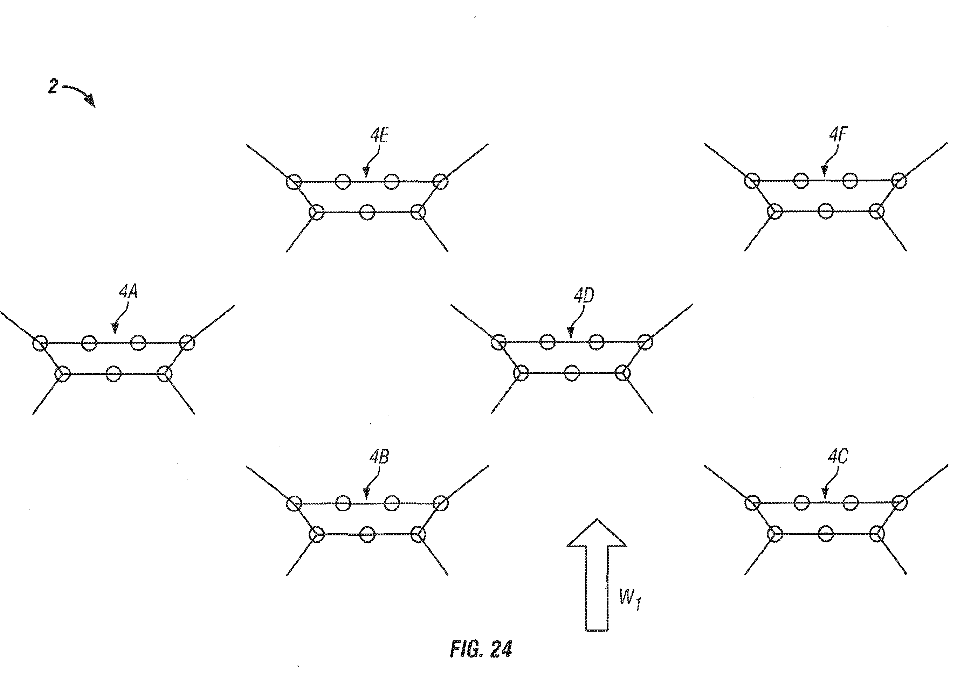

Figure 24 is a top perspective view schematic diagram illustrating multiple floating modules of the wind energy system in a first state of orientation for a first wind direction.

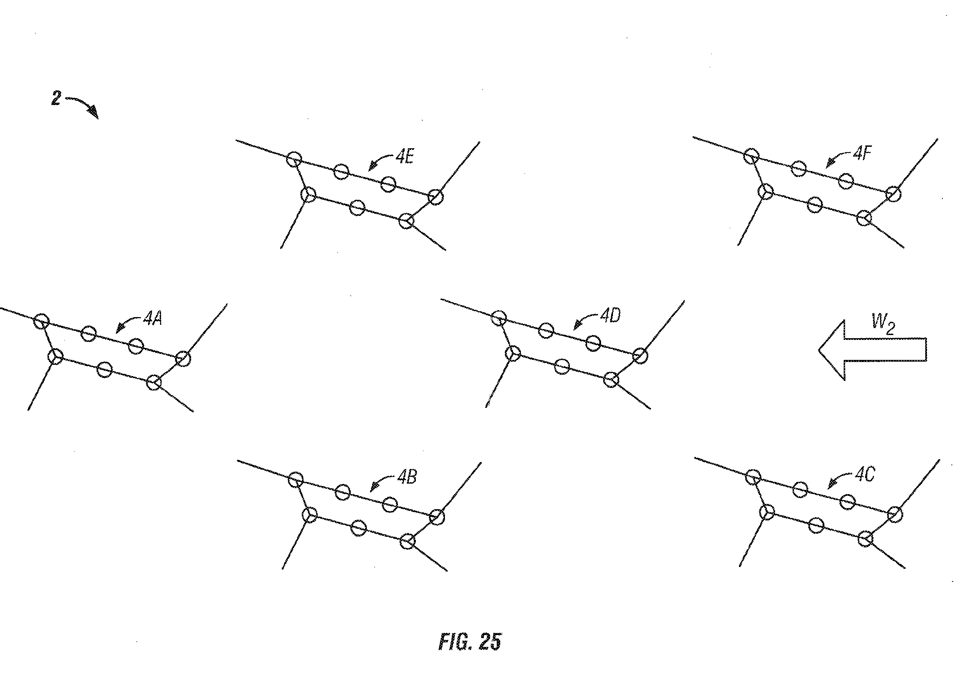

Figure 25 is a top perspective view schematic diagram illustrating multiple floating modules of the wind energy system in a second state of orientation for a second wind direction.

### DETAILED DESCRIPTION

The Figures described above and the written description of specific structures and functions below are not presented to limit the scope of what Applicant has invented or the scope of the appended claims. Rather, the Figures and written description are provided to teach any person skilled in the art how to make and use the inventions for which patent protection is sought. Those skilled in the art will appreciate that not all features of a commercial embodiment of the inventions are described or shown for the sake of clarity and understanding. Persons of skill in this art will also appreciate that the development of an actual commercial embodiment incorporating aspects of the present inventions will require numerous implementation-specific decisions to achieve the developer's ultimate goal for the commercial embodiment. Such implementation-specific decisions may include, and likely are not limited to, compliance with system-related, business-related, government-related and other constraints, which may vary by specific implementation, location and from time to time. While a developer's efforts might be complex and time-consuming in an absolute sense, such efforts would be, nevertheless, a routine undertaking for those of ordinary skill in this art having benefit of this disclosure. It must be understood that the inventions disclosed and taught herein are susceptible to numerous and various modifications and alternative forms. The use of a singular term, such as, but not limited to, "a," is not intended as limiting of the number of items. Also, the use of relational terms, such as, but not limited to, "top," "bottom," "left," "right," "upper," "lower," "down," "up," "side," and the like are used in the written description for clarity in specific reference to the Figures and are not intended to limit the scope of the invention or the appended claims. Where appropriate, elements have been labeled with alphabetical suffixes ("A", "B", and so forth) to designate various similar aspects of the system or device. When referring generally to such elements, the number without the letter may be used. Further, such designations do not limit the number of elements that can be used for that function.

The disclosure provides a wind energy system with one or more floating modules having a plurality of vertical wind turbines mounted thereon. A multipoint mooring system couples the floating module to a seabed, the mooring system having at least two mooring points with at least two lines positioned at locations around the floating module with the wind turbines. A rotation system is coupled to the floating module and adapted to twist the floating module relative to wind direction while the multipoint mooring system is coupled between the seabed and the floating module. The rotation system can include induced gyroscopic torque from counter-rotating wind turbines and a self-adjusting induced gyroscopic torque differential from varying wind directions. Other rotation systems can include winches and translating assemblies that can be activated to tighten or loosen mooring lines in the multipoint mooring system coupled to the floating module in a catenary manner.

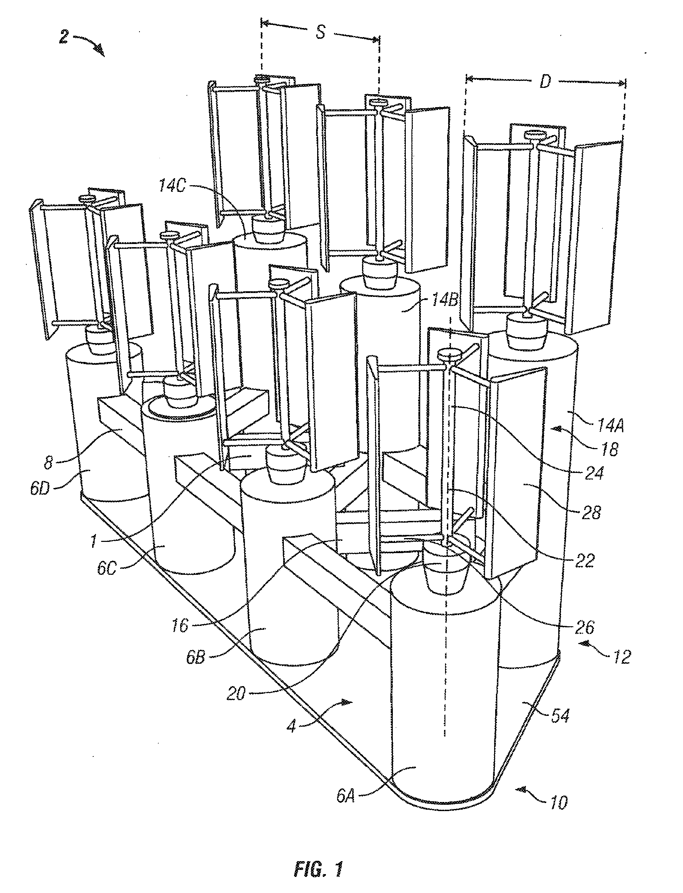

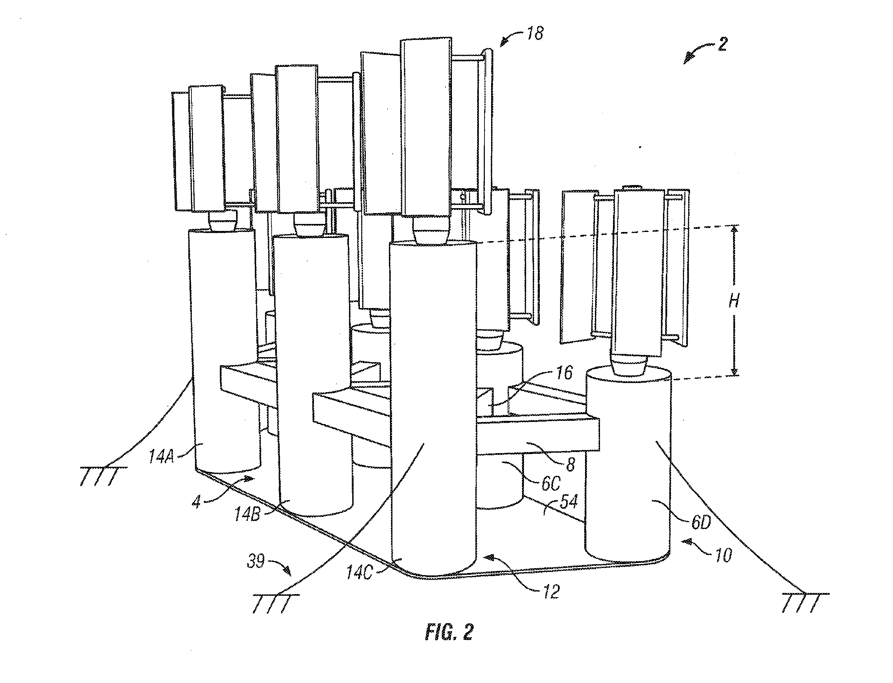

Figure 1 is a top perspective view schematic diagram illustrating an exemplary embodiment of a wind energy system of the present disclosure. Figure 2 is a top perspective view schematic diagram illustrating the exemplary embodiment of the wind energy system of Figure 1 from a reverse direction. The figures will be described in conjunction with each other. The wind energy system 2 generally includes at least one floating module 4. The floating module will generally include a series of floating structures connected by frame elements. The particular embodiments shown herein are generally open frame arrangements in that waves and wind can pass through the frame structure. Other embodiments not shown but contemplated can include closed floating modules where one or more portions are closed or substantially closed to the wind or waves. In at least some embodiments, the floating module 4 will include floating spars. Generally, a floating spar is a floating structure having a cross-sectional dimension smaller than a longitudinal dimension and is positioned in the sea in an upright orientation to support a structure above the spar. The spars can form a portion of the flotation capability of the floating module. In one or more embodiments of the present disclosure, the spars, such as spars 6A, 6B, 6C, and 6D (generally referred to as "spar 6") can be used to support wind turbines and thus will be termed a turbine spar herein. One or more frame members 8 can be coupled between adjacent turbine spars. In at least some arrangements, the frame work can align multiple turbine spars in a row 10. Other turbine spars 14A, 14B, 14C (generally "spar 14") can be coupled together with similar frame members to form a second row 12. One or more cross frame members 16 can couple the rows 10 and 12 together to form a lattice type structure. The turbine spars in a row can be offset in alignment from an adjacent row of turbine spars, so that turbines mounted therein can receive the maximum of amount of wind when the direction is aligned perpendicular to the rows. One or more wind turbines 18 can be mounted to the turbine spars 6, 14. In general, the wind turbine 18 will include a generator 20 that converts the rotational energy of the wind turbine into electrical energy. The wind turbine 18 includes a rotational axis 22 about which a center shaft 24 is positioned and rotates. A plurality of support members 26 extend from the center shaft 24 radially outward and are coupled to a plurality of turbine blades 28. The turbine blades are designed and shaped to convert the force of wind into a rotational energy around the center shaft 24.

The present disclosure envisions primarily vertical wind turbines and thus is illustrated in such fashion. Vertical wind turbines generally create a vortex axially aligned with the center shaft and have less turbulence in a radial direction from the rotational axis 22. Thus, vertical wind turbines can be positioned closer to each other than a typical horizontal wind turbine. For example, and without limitation, it is customarily known that horizontal wind turbines require about five diameters spacing between wind turbines to maximize the wind energy without interference from adjacent wind turbulence. In other words, the diameter of the blades turning about the horizontal shaft is multiplied by five and that result is the typical spacing between adjacent towers of horizontal wind turbines. While engineering can accomplish such spacing in the floating module 4, it is believed that commercially a smaller allowable spacing of the vertical wind turbines 18 results in a more efficiently constructed floating module 4. For example and without limitation, the floating wind turbines 18 can be spaced at a distance S of 1 D to 5D, where D is the diameter of wind turbine blades rotation about the rotational axis 22. More preferably, an S spacing can be about 2D to 3D. Such spacings herein include increments therebetween, such as 2.1, 2.2, 2.3, and so forth, and further increments of 2.11, 2.12 and so forth. For example, and without limitation, a 20 m diameter vertical wind turbine can be spaced adjacent to another wind turbine at a distance of 40 m to 60 m. By contrast, a typical horizontal wind turbine with a rotational diameter of 100 m would generally be spaced 500 m to the next wind turbine. Further, the turbines spar can have different heights above a water level. For example, the turbine spars 6 on row 10 can have a shorter height than the turbine spars 14 on row 12. The difference in height is illustrated by "H" in Figure 2. The offset can help provide more wind to the rows of wind turbines located behind the leading row of wind turbines.

Further, the floating module can include one or more heave plates 54. The vertical movement of the barge from wave motion is termed "heave." One or more heave plates can be coupled at a location below the water surface to the one or more spars to change a resonance period of motion of the floating module relative to a period of wave motion to better stabilize the module and resist the heave. In at least one embodiment, a heave plate can be coupled below or between the one or more spars. In other embodiments, a separate heave plate can be coupled to each of the one or more spars or groups of the one or more spars, or to frame members. The drawings herein illustrate several non-limiting examples.

One aspect of the wind energy system is that smaller, more commercially available vertical wind turbines can be combined to create a larger collective capacity per floating module. For example, a vertical wind turbine creating 0.6 megawatts ("MW") can be combined with other wind turbines on the floating module, so the capacity of the floating module, such as the illustrated one in Figure 1 of seven wind turbines 18, could be 4.2 megawatts. Further, as illustrated herein, multiple floating modules with their respective wind turbines can collectively create a larger wind energy system (sometimes referred to as a "wind energy farm"). It is expressly understood that the signs and capacity of individual wind turbines is only illustrative and non-limiting and can vary as well as the number of wind turbines on any given floating module. Thus, the above figures are only exemplary as would be known to those with ordinary skill in the art.

The wind energy system further includes a multipoint mooring system 39. Details of the multipoint mooring system will be described below. However, in general, the multipoint mooring system includes multiple mooring points disposed around the floating module and includes lines and anchors connected to a seabed for stability. One of the unique features of the present disclosure is the ability of the wind energy system to adjust to a change of wind direction in spite of the traditional fixed orientation from a multipoint mooring system on a floating structure.

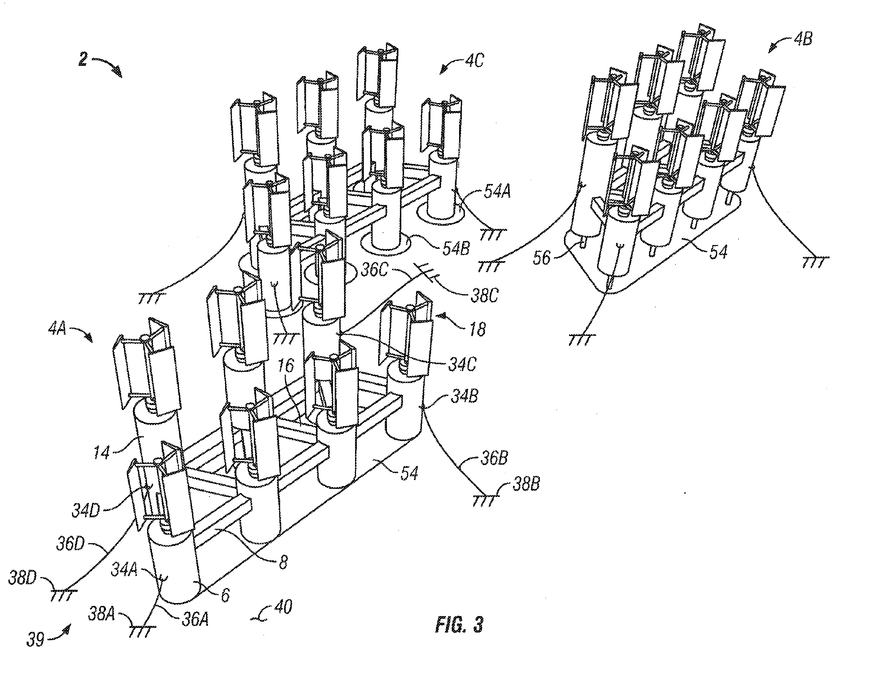

Figure 3 is a top perspective view schematic diagram illustrating multiple floating modules of an exemplary embodiment of the wind energy system. The wind energy system 2 can include multiple floating modules 4A, 4B, 4C with their wind turbines 18 coupled thereto. The floating module 4 can be moored by a multipoint mooring system 39. The multipoint mooring system 39 can be coupled between a seabed 40 and one or more structures of the floating module 4, such as the turbine spars 6, 14, or frame members 8, 16. In general, the multipoint mooring system 39 includes a mooring point 34 on a portion of the floating module, such as periphery of the floating module, a line 36 coupled to the mooring point 34 and extending down to an anchor 38 coupled to the seabed 40. The term "mooring point" is used broadly and can include any structure or fastening system that can couple the mooring line to the floating structure. The term "line" is used broadly and can include any extended coupling means, such as wire cable, wire lines, chains, straps, and so forth. The term "anchor" is used broadly and can include any stationary means of holding the line in a fixed position, and generally coupled to the seabed or an intermediate structure coupled to the seabed. The anchor can be located above the seabed or inserted at least partially into the seabed. The multipoint mooring system 39 will include at least two such assemblies of mooring points, lines, and anchors. For example, in the embodiments shown for the floating module 4A, four mooring points are shown, that is, mooring points 34A, 34B, 34C and 34D, which are each coupled to mooring lines 36A, 36B, 36C and 36D. The mooring lines are then coupled to the anchors 38A, 38B, 38C, and 38D for mooring the floating module in position to the seabed. As shown in other embodiments, the number of mooring points can vary with the minimum being two mooring points. Specific embodiments shown herein include two, three, and four mooring points, although a greater number can be used. The multipoint mooring system restricts the relative movement and orientation of the floating modules and can provide some stability to the modules compared to single point mooring systems as referenced in the background above.

Further, the floating module 4A includes an exemplary heave plate 54 encompassing a projected area under the floating module coupled to the spars 6. The floating module 4B includes an exemplary heave plate 54 below the spars encompassing a projected area under the floating module that is coupled through some intermediate supports 56 to extend the heave plate deeper into surrounding water. The floating module 4A includes an exemplary heave plate 54 divided into portions 54A, 54B encompassing a projected area under the floating module.

The floating modules 4A, 4B, 4C can form a wind energy system that has a cumulative output from the multiple floating modules. More or less floating modules can be used for the wind energy system. Further, the size, shape and number of wind turbines can be varied between modules as well as within a single module, as may be appropriate for the particular circumstances. Thus, the above descriptions are non-limiting and merely exemplary.

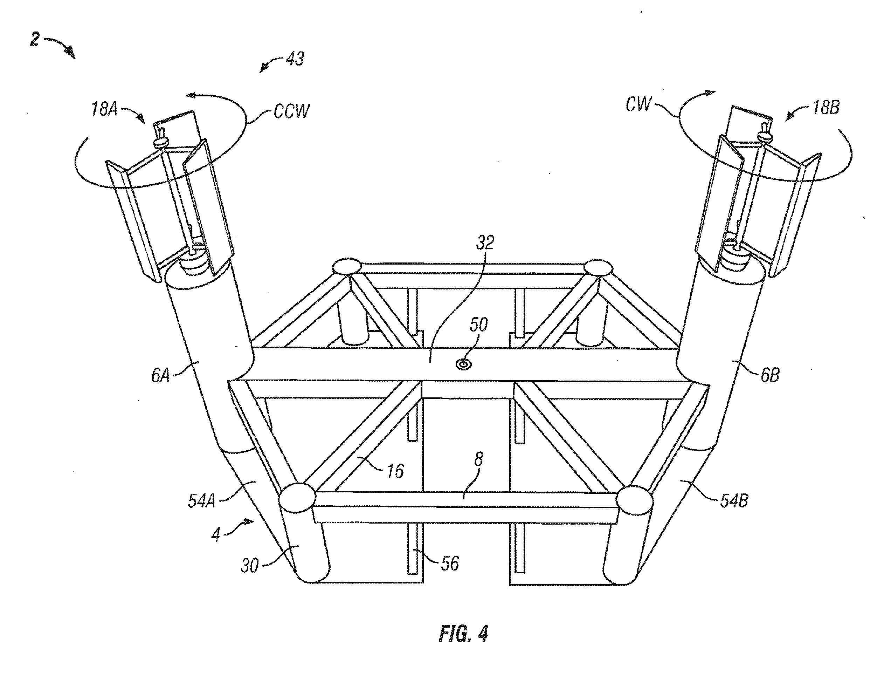

Figure 4 is a top perspective view schematic diagram illustrating another exemplary embodiment of the wind energy system. The wind energy system 2 includes the floating module 4 and a pair of vertical wind turbines 18A, 18B coupled to a pair of turbine spars 6A, 6B. The number of pairs of wind turbines can vary (and presumably the number of turbine spars for the wind turbines although a sufficiently large turbine spar can support multiple wind turbines), depending on the size of the floating module and support capabilities of the module. Further, the number of wind turbines can be an odd number in at least some embodiments. The frame members 8, 16 form a grid pattern of structural support between the spaced turbine spars 6A, 6B. A plurality of stabilizer spars 30 are spaced at different locations around the floating module 4. The stabilizer spars provide some buoyancy to the floating module and are generally disposed around an outer periphery of the floating module to maximize a stabilizing force at a distance from a centroid 50 of the floating module 4. A work deck 32 can also be provided with the floating module 4.

The floating module 4 includes an exemplary heave plate 54 divided into portions 54A, 54B encompassing a projected area under the floating module. The heave plate portions 54A, 54B can be supported by intermediate supports 56.

As referenced above, in a typical installation of separated wind turbines, a maintenance vessel approaches each wind turbine separately. With the floating module and advantageous work deck, maintenance crews and other personnel can more readily access wind turbines installed on a single floating module. Further, the work deck can include a helicopter pad, and even personnel living quarters, as may be desired for particular installations.

The embodiment shown in Figure 4 also illustrates one embodiment of a rotation system 43 formed by a counter-rotating arrangement between at least one pair of wind turbines. Specifically, the wind turbine 18A can rotate in one direction, such as a counter-clockwise ("CCW") direction, while the wind turbine 18B can rotate in a counter-clockwise ("CW") direction. Those with ordinary skill in the art can build and design wind turbines to rotate in opposite directions, depending on blade mounting, design gearing, and the like. The effects of the rotation system and operation will be described below in reference to Figures 8 and 9 of the counter-rotating arrangement for the rotation system embodiment.

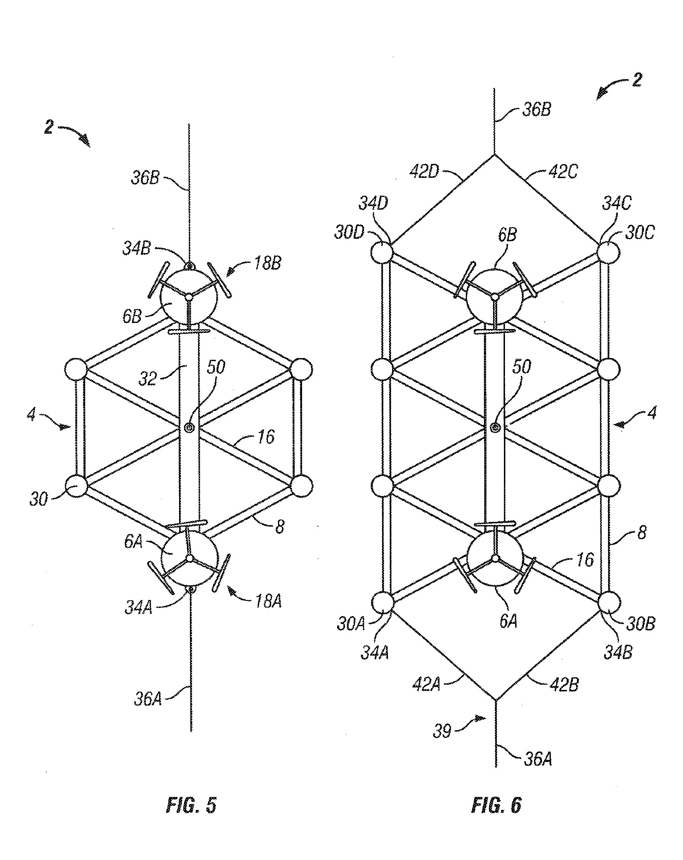

Figure 5 is a top view schematic diagram of a multipoint mooring system as part of the wind energy system. The exemplary wind energy system 2 includes a floating module 4 with one or more turbine spars 6, a lattice structure of frame members 8, 16, coupled with a plurality of stabilizer spars 30 around a periphery of the floating module 4. Other types of arrangements for the floating module can be made. For example, the close and open structure of the floating module can vary, the number of stabilizer spars and location can vary, including peripherally, centrally, or both, size and number of turbine spars, and even location of wind turbines on the floating modules, such as one or more frame members, or stabilizer spars, as is appropriate for the particular installation. The number of mooring points and location of the mooring points can also vary with some further exemplary illustrations being provided in other figures herein. In at least one embodiment, the multipoint mooring system can be coupled to the turbine spars 6. For example, a first mooring point 34A can be located on a first turbine spar 6A that is coupled to a line 36A, is mounted to an anchor (not shown) on the seabed. A second mooring point 34B can be coupled to a second turbine spar 6B and coupled to a line 36B which also is mounted to an anchor on the seabed (not shown).

Figure 6 is a top view schematic diagram of another embodiment of the multipoint mooring system of the wind energy system. The wind energy system 2 includes a floating module 4 with a pair of wind turbines (not shown) that can be mounted to the turbine spars 6A, 6B. As described in Figure 5, the quantity, location and number of wind turbines can vary depending on the module. In at least one embodiment, it is envisioned that the equal sized wind turbines will be spaced on distal sides of the floating module equally from the centroid 50. Other arrangements are possible, including moving one turbine closer to the centroid 50 than the other, which may adjust the balance and performance of the floating module. The floating module can further include frame members 8 that couple the plurality of stabilizer spars 30, such as stabilizer spars 30A, 30D, with other spars therebetween along one row. The cross frame members 16 can couple one row of spars to another row of spars. Another row of stabilizer spars can be disposed distal from the row of first stabilizer spars. For example, stabilizer spars 30B, 30C can be coupled in a row with other stabilizer spars with the turbine spars and wind turbines disposed therebetween, so that floating module 4 creates a stable platform. The multipoint mooring system 39 can include, in this embodiment, four mooring points. For example, a first mooring point 34A can be coupled to a first stabilizer spar 30A, a second mooring point 34B can be coupled to the second stabilizer spar 30B, a mooring point 34C coupled to a stabilizer spar 30C, and a mooring point 34D coupled to a stabilizer spar 30D. The mooring line 36A can be coupled to the mooring point either directly or through intermediate jumper lines that split between the mooring points. For example, the first jumper line 42A can be coupled between the mooring point 34A and the line 36A. A second jumper line 42B can be coupled between the mooring point 34B and the line 36A to form a "Y" configuration. Similarly, the third and fourth mooring points 34C, 34D can be coupled to the second mooring line 36B with jumper lines 42C, 42D.

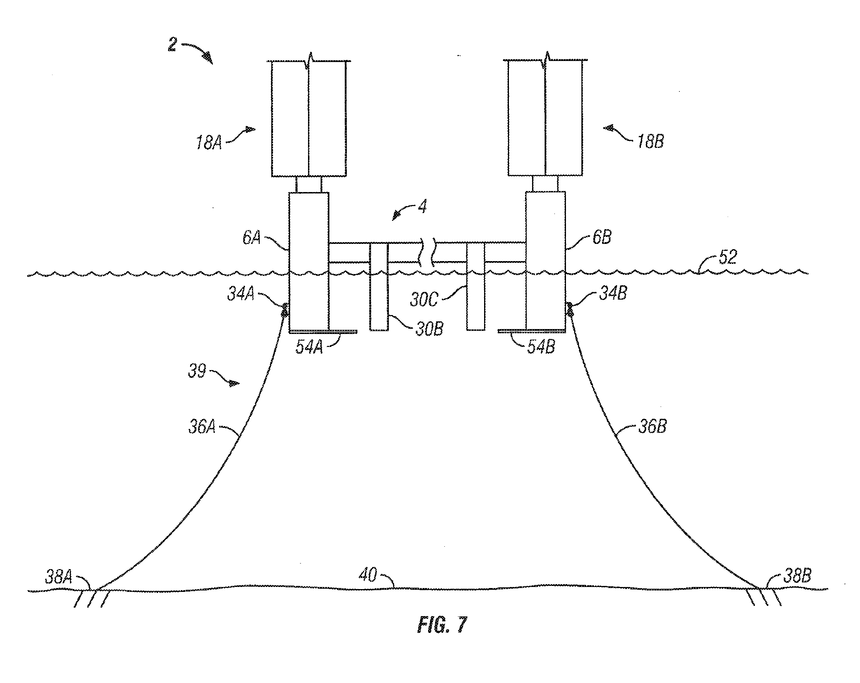

Figure 7 is a side view schematic diagram of the exemplary multipoint mooring system of the wind energy system. The wind energy system 2 generally includes the floating module 4 coupled to turbine spars 6 and stabilizer spars 30. The wind energy system 2 is designed to float in the water 52 at least partially below the water level to allow the wind turbines 18A, 18B to sufficiently rotate without interference from the water. The floating module 4 includes exemplary individual heave plates 54A, 54B coupled under the water to the spars 6A, 6B, respectively, of the floating module.

The multipoint mooring system 39 includes at least two mooring points 34A, 34B that are in turn coupled to mooring lines 36A, 36B and extend downward to the seabed 40 to be coupled to anchors 38A, 38B. The lines 36 that extend from the mooring point are secured in a catenary fashion. As noted with those of ordinary skill in the art, a catenary line extends outwardly from the structure to which it secures so that the line forms a curbed length. This catenary shape of the line is in contrast to a tension line which is often mounted straight below the structure and is fastened in a tension manner, so that it is not curved in an undisturbed state.

Figure 8 is a top view schematic diagram of the wind energy system in a neutral first state of orientation with an embodiment of a rotation system having an induced gyroscopic torque from the wind turbines. Figure 8A is a side view schematic diagram of a mooring line in the first state of orientation. Figure 9 is a top view schematic diagram of the wind energy system twisted to a second state of orientation with the rotation system of Figure 8 having an induced gyroscopic torque differential from the wind turbines. Figure 9A is a side view schematic diagram of a mooring line in the second state of orientation. The figures will be described in conjunction with each other. The exemplary wind energy system 2 includes the floating platform 4 with a pair turbine spars 6A, 6B coupled to a pair of wind turbines 18A, 18B. A rotation system 43 is coupled with the floating module, and in at least embodiment, includes a counter-rotating design of the wind turbines and effects therefrom on the floating module, as described in Figure 4. For example, the wind turbine 18A can rotate in a counter-clockwise direction, and wind turbine 18B can rotate in a clockwise direction. The mooring lines 36A, 36B secure the floating module 4 in a relatively fixed position to the seabed 40 subject to latitude provided by the catenary suspension of the mooring lines, shown in Figure 8A. A centroid 50 is a center of mass of the wind energy system 2.

In operation, when the wind direction is perpendicular to a line between the rotational axis of the wind turbines 18A, 18B, then each wind turbine, 18A, 18B receives a maximum loading of available wind. The rotation of the respective wind turbines in a counter-rotating arrangement induces a balanced gyroscopic torque. The gyroscopic torque is dependent upon the speed of the rotation and the rotational moment of inertia, which itself can be dependent upon such factors as the loading on the blades, the angle, shape, and weight of the blade, and blade distance from the rotational axis. Other factors can also apply. In general, when the turbines are symmetrically shaped and sized, an equal distance from the centroid 50 will yield a balanced gyroscopic torque from a counter-rotation that will maintain the wind energy system in a first state. The first state can be a neutral state when balanced.

When the wind changes from a direction W1 to a direction such as W2 that is non-perpendicular to the line between the wind turbine center of rotation, then the wind at direction W2 encounters wind turbine 18A prior to encountering the wind turbine 18B. If the wind direction is sufficiently angled, so that the wind turbine 18A disturbs and reduces the wind speed to the wind turbine 18B, then the second wind turbine will likely operate with a lower speed than the wind turbine 18A. The lower difference in speed caused by the difference in wind direction induces a difference in the gyroscopic torque between the wind turbine 18A operating at full speed and the wind turbine 18B operating at a lower speed. This gyroscopic torque differential causes an imbalance in the system around the centroid 50.

The imbalance is self-adjusting, restrained primarily by the catenary tension in the lines 36A, 36B. With the catenary suspension, the lines allow some latitude for the self-adjusting gyroscopic torque differential. Thus, at the wind direction W2, shown in Figure 9, the faster rotating wind turbine 18A induces a higher torque than the counter-rotating wind turbine 18B. The imbalance of gyroscopic torque twists the orientation of the floating platform 4 from the first state of orientation in a balanced torque condition to a second state of orientation in trying to rebalance the torque on the system. At least one of the mooring lines 36 is tightened as the slack in the catenary suspension is reduced and the floating platform 4 is twisted to the second state. In at least one embodiment, the tightened mooring line(s) 36 restricts an amount of rotational orientation of the second state, as shown in Figure 9 and Figure 9A. If the wind changes back to the direction W1, the catenary suspension on the lines 36A, 36B helps bias the system 2 back to the first state, as shown in Figure 8 and Figure 8A. Further, if the wind changes to direction W1, the wind turbine 6B can then develop a higher gyroscopic torque compared to the wind turbine 18A, because the wind may impinge the wind turbine 18B first in the orientation shown in Figure 9 and cause the wind turbine 18A to rotate faster. This gyroscopic torque differential can help rebalance the system back to the first state at wind direction W1.

While one pair of wind turbines is illustrated, it is to be understood that other quantities of wind turbines could be used. In general, it is envisioned that wind turbines operating in one direction would be disposed on one side of the centroid 50 relative to the mooring lines, and the turbines operating in the counter-direction would be disposed on the opposite side of the centroid 50. Other arrangements can be envisioned using the gyroscopic torque differential created by imbalanced conditions from counter-rotating wind turbines. Further, while two mooring lines are shown, it is to be understood that other numbers of mooring lines can be used with the same or similar concepts.

Figure 10 is a top view schematic diagram of the wind energy system in a first state of orientation. Figure 11 is a top view schematic diagram of the wind energy system in a second state of orientation. Figure 12 is a top view schematic diagram of the wind energy system in a reset first state of orientation. Figure 13 is a top view schematic diagram of the wind energy system in a third state of orientation. The figures will be described in conjunction with each other. As described above, for example in Figures 8-9A, the catenary suspension of the mooring lines 36 in a first state of orientation of the floating module restricts the amount of change to a second orientation when the mooring lines become tight. Depending on the sequence of change in wind directions, the system 2 may become "set" in a particular orientation when the mooring lines are tight and not able to adequate self-adjust itself to a different orientation. In at least one embodiment, the system 2 with its rotation system 43 includes the ability to "reset" the orientation to allow further self-adjustments in orientation.

In the embodiment shown in Figures 10-13, the system 2 includes a floating module 4 with at least two turbine spars 6A, 6B and at least two wind turbines 18A, 18B. The floating module can be moored with mooring lines 36A, 36B to a seabed 40 having anchors 38A, 38B. In the embodiment shown, the rotation system can include the counter-rotating design of the wind turbines 18A, 18B that are self-adjusting for the orientation of the floating module, as described above. The rotation system 43 can also include one or more winches 44 coupled to the floating module, operating in conjunction with the mooring lines. The winch 44 can rotate and change the length of the mooring lines 36A, 36B coupled thereto, and actively force a change in the orientation of the floating module. In this and in other embodiments herein, the mooring lines 36A and 36B can be separate mooring lines, or the same mooring line where the "mooring lines" 36A, 36B would be portions of the mooring line. The winch 44 can be activated with one of more energy sources to rotate, so that the lines 36A, 36B can be tightened or loosed. By selectively tightening and loosening different mooring lines, the orientation of the floating module 4 can be altered and "reset", as further described herein.

More specifically, in Figure 10, the floating module 4 is in a first state of orientation and moored with the mooring line 36A to the anchor 38A on one portion of the floating module and moored with the mooring line 36B to the anchor 38B on another portion. Generally, but not necessarily, the mooring lines 36A, 36B can be the same length when the floating module is in a neutral rest position.

When the wind blows at the wind direction W1, the wind turbine 18A may turn faster than the wind turbine 18B and self-adjust the orientation of the floating module, so that the wind turbine 18B can rotate faster, as described above. However, the self-adjustment is restricted, as shown in Figure 11, by the length of the mooring lines 36A, 36B as they become tight. If the wind direction shifts to the wind direction W2, the self-adjustment bias of the faster rotating wind turbine 18A is already restricted by the tight mooring lines 36A, 36B, and the turbine 18B may not be able to as efficiently utilize the wind in the wind direction W2 from the orientation shown in Figure 11. Thus, the system 2 is set in a less than advantageous orientation.

The winch 44 can be used to reset the orientation, for example, to the first state of orientation, as shown in Figure 12. The winch 44 can rotate and thereby pull on one mooring line, while loosening the other mooring line. When the winch rotates in one direction, the winch decreases the length of the mooring line 36A extending away from the floating module toward the anchor 38A to pull the floating module closer to the anchor. At the same time, the winch 44 can increase the length of the mooring line 36B extending away from the floating module toward the anchor 388. If the mooring lines 36A, 36B are a single mooring line, the concurrent pulling on one mooring line and extending the other mooring line can be accomplished by winding the mooring line around the reel of the winch 44. If the mooring lines 36A, 36B are separate mooring lines, then a quantity of additional length of mooring line for each line 36A, 36B can wrapped in reverse directions relative to each other around the reel of the winch. The rotation of the winch causes one line length to increase and the other line length to decrease. Thus, the winch 44 resets the orientation of the floating module by pulling the floating module closer to one of the anchors.

The wind direction W2 is now at an angle to the floating module such that the wind turbine 18B can increase its rotation. When the floating structure begins to rotate, as the floating module attempts to self-adjust to a more advantageous orientation, the winch can rotate in an opposite direction that now increases the length of the mooring line 36A and decreases the length of the mooring line 36B. Thus, the system 2 is allowed to self-adjust to the wind direction W2, as shown in Figure 13. The relative lengths of the mooring lines can be adjusted to accomplish various orientations.

Other embodiments are contemplated. For example, the rotation system can use multiple winches coupled to multiple mooring lines to change the length of the respective mooring line with each winch. Further, the rotation system can include one or more translating assemblies, described below in reference to Figure 22, instead of or in addition to the winches.

Figure 14 is a top view schematic diagram of another embodiment of a multipoint mooring system of the wind energy system. The wind energy system 2 generally includes a floating module for having at least two turbine spars 6 coupled to the plurality of wind turbines 18. The floating module 4 can further include a plurality of stabilizer spars 30. The multipoint mooring system 39 includes at least two mooring points with associated mooring lines. For example, a first stabilizer spar 30A can be coupled to a mooring line 36A, a second stabilizer spar 30B can be coupled to a second mooring line 36B, and a turbine spar 6 can be coupled to a mooring line 36C. A rotation system can be coupled to the floating module to orient the module from a first orientation to a second orientation. For example, the various rotation systems illustrated in other figures can be applied to the embodiments shown in Figures 14-17, and other embodiments of a wind energy system on a floating module.

Figure 15 is a top view schematic diagram of another embodiment of the multipoint mooring system of the wind energy system. The wind energy system 2 is another variation of the wind energy system illustrated in Figure 14 with additional stabilizer spars and frame members. In a similar manner as Figure 14, the wind energy system 2 includes a floating module 4 having at least two turbine spars 6, mounted to at least two vertical wind turbines 18 with a plurality of stabilizer spars 30 and frame members disposed therebetween. The embodiment can form one or more rows of various members that are coupled together with other framed members. The multipoint mooring system 39 can likewise include at least two mooring lines coupled to the floating module 4. For example, a first stabilizer spar 30A can be coupled to a mooring line 36A, a second stabilizer spar 30B can be coupled to a second mooring line 36B, and a turbine spar 6 can be coupled to a mooring line 36C.

Figure 16 is a top view schematic diagram of a multipoint mooring system of the wind energy system. The wind energy system 2 includes a floating module 4 with a frame structure having at least two turbine spars 6 for supporting at least two turbines 18 coupled thereto and a plurality of stabilizer spars 30. This embodiment shows additional mooring lines over the embodiments shown, for example, in Figure 5 and Figure 14. For example, a first mooring line 36A can be coupled to a first stabilizer spar 30A, and a second mooring line 36B can be coupled to a second stabilizer spar 30B. A third mooring line 36C can be coupled to a third stabilizer spar 30C. A fourth mooring line 36D can be coupled to a fourth stabilizer spar 30D. The plurality of couplings creates the multipoint mooring system 39. Further, while the mooring points are shown coupled to the stabilizer spars 30, it is to be understood that the mooring lines can be coupled to the frame members, the turbine spars, or a combination thereof instead of, or in addition to, such coupling.

Figure 17 is a top view schematic diagram of another embodiment of a multipoint mooring system of the wind energy system. The wind energy system 2 includes the floating module 4 with at least two turbine spars 6 and at least two wind turbines 18 coupled thereto. The floating module 4 further includes a multipoint mooring system 39 having at least two mooring lines 36 mounted to the floating module 4. For example, the mooring lines 36 can be mounted to the corners of the floating module 4 at locations where the stabilizer spars 30 are located.

Figure 18 is a side view schematic diagram of a multipoint mooring system of the wind energy system with a rotation system having one or more winches. The wind energy system 2 includes the floating module 4 with at least two turbine spars 6, such as turbine spars 6A, 6B with at least two wind turbines 18, such as wind turbines 18A, 18B mounted thereto and a plurality of stabilizer spars, such as spars 30B, 30C. The multipoint mooring system 39 includes one or more mooring points 34, such as mooring points 34A. 34B, coupled to one or more mooring lines 36, such as mooring lines 36A, 36B, which are mounted to one or more anchors 38, such as anchors 38A, 38B.

An alternative embodiment of a rotation system 43 is also shown in Figure 18. The rotation system 43 can be operatively coupled with the floating module 4 to effect the orientation of the module. The rotation system 43 can include one or more winches 44, such as winches 44A, 44B (generally referenced herein as "winch 44") operating in conjunction with the mooring lines. The winch 44 can be coupled to the winch line 36. By selectively tightening and loosening different mooring lines, the orientation of the floating module 4 can be altered, as further described herein. Thus, the orientation of the floating module 4 can be altered even with a multipoint mooring system coupled to the module.

Figure 19 is a top view schematic diagram of the wind energy system in a first state of orientation with another embodiment of a rotation system having at least one winch. Figure 20 is a top view schematic diagram of the wind energy system twisted to a second state of orientation with the rotation system of Figure 19 having at least one winch. The figures will be described in conjunction with each other. The wind energy system 2 includes a floating module 4 having at least two vertical wind turbines (not shown) coupled thereto. The floating module 4 can be coupled with a multipoint mooring system 39 having at least two mooring points 34 coupled to at least two mooring lines 36. The rotation system 43 includes one or more winches 44 that can be coupled to one or more mooring lines 36. The winch 44 can be coupled in a location convenient to the mooring point 34 to pull on or release the mooring line coupled to the winch. For example and without limitation, a mooring line 36A can be coupled to a mooring point 34A and coupled to a winch 44A. A mooring line 36B can be coupled to a mooring point 34B and to a winch 44B. A mooring line 36C can be coupled to a mooring point 34C and a winch 44C. The mooring line 36B can be coupled to a mooring point 34D and a winch 44D. The mooring points can allow the winch lines to be coupled therethrough and slidably engaged to the mooring points, while the mooring lines can be coupled to the winches to be pulled on or released therefrom.

As shown in Figure 19, the floating module 4 can be in a first state of orientation that may be conducive to a particular wind direction at that time. However, if the wind changes direction, one or more of the wind turbines coupled to the floating module 4 can lose its maximum output efficiency by wind turbulence from other adjacent wind turbines or other factors. To adjust the orientation of the floating module, one or more winches can be operated to tighten or loosen the mooring lines 36. Depending on the degree of orientation desired, the catenary suspension of a particular line, and other factors, decisions can be made of which and how many of the winches need to be activated to pull on or release the appropriate mooring line. For example, in the non-limiting example shown in Figure 20, the winch 44A can tighten the mooring line 36A by pulling on the mooring line and taking up a portion of the mooring line onto the reel of the winch. Conversely, the winch 44B can allow further slack of the mooring line 36B by releasing a portion of the mooring line 36B rolled up on the reel of the winch 44B. Similarly, the winch 44C can pull on the mooring line 36C and thus tighten the line 36C, while conversely the winch 44D can loosen the line 36D by releasing a portion of the line. The resulting cooperative efforts of the one or more winches and mooring lines form the rotation system 43 and change the orientation of the floating module 4 in Figure 20 relative to the orientation of the floating module in Figure 19. While it is envisioned that various amounts of orientations can be accomplished by different rotation systems operated or activated to a variety of degrees, generally the structure can move ± 45° from a predetermined optimal neutral state and obtain most of the benefit from varying wind directions. Further, it is likely that a variance of ± 20° will be sufficient to encompass a significant amount of the benefit from varying the orientation of the floating module 4.

Figure 21 is a top view schematic diagram of the wind energy system in a first state of orientation with another embodiment of a rotation system having at least one winch. Figure 21 illustrates a variation of the rotation system 43 from the embodiments shown in Figures 19 and 20. A winch 44A can be coupled to both the mooring line 36A and the mooring line 36D. Alternatively, the mooring lines 36A, 36D can form a single mooring line coupled to the winch 44A and extending outwardly from the floating module in both directions. Similarly, the winch 44B can be coupled to both the mooring line 36B and the mooring line 36C, or a single line that includes both the mooring lines 36B, 36C. The orientation of the floating module 4 can be varied by activating one or more of the winches 44A, 44B. Because the winches are coupled to both lines (or the single line), rotating the winch results in one line being tightened and one line being loosened. The winch 44A can be rotated which loosens one of the mooring lines 36A, 36D, while tightening the other mooring line. Similarly, the winch 44B can be rotated to loosen and tighten the mooring lines 36B, 36C, while tightening the other mooring line. In some modes of operation, the winches 44A, 44D can be rotated so that opposite sides of their respective mooring lines are loosened and tightened. For example, the winch 44A can be rotated to tighten the mooring line 36A and loosen the mooring line 36D. The winch 44B can be rotated to loosen the mooring line 36B and tighten the mooring line 36C. Collectively, the loosening and tightening can reorient the floating module 4 into the exemplary orientation shown in Figure 20.

Figure 22 is a top view schematic diagram of the wind energy system in a first state of orientation with another embodiment of a rotation system having at least one translating assembly in a first position. Figure 23 is a top view schematic diagram of the wind energy system twisted to a second state of orientation with the rotation system of Figure 22 having the translating assembly in a second position. The figures will be described in conjunction with each other. The wind energy system 2 includes a floating platform 4 with at least two wind turbines (not shown) coupled thereto. The floating module 4 can be moored to a seabed with a mooring system 39 having at least two mooring points 34 around the floating platform 4 with the wind turbines. For example, at least two mooring points 34A, 34B, 34C and 34D can be coupled to at least two mooring lines 36A, 36B, 36C and 36D, respectively.

The exemplary embodiment of the rotation system 43 can include at least one translating assembly 46 coupled to at least two mooring lines coupled to at least two mooring points. For example, the mooring line 36A, coupled to the mooring point 34A, can be coupled to a first translating assembly 46A at a coupling point 48A on the assembly. Similarly, the mooring line 36D, coupled to the mooring point 34D, can be coupled to the translating assembly 46A at a coupling point 48D on the assembly. The mooring line 36B, coupled to the mooring point 34B, can be coupled to a second translating assembly 46B at a coupling point 48B. The mooring line 36C, coupled to the mooring point 34C, can be coupled to the second translating assembly 46B at the coupling point 48C. While the mooring lines 36A, 36D which are coupled to the first translating assembling 46A are described as separate lines, it is to be understood that the lines can be a continuous line through the mooring points 34A, 34D and coupled to the translating assembly 46A. Likewise, the lines 36B, 36C can actually be a single line passing through the mooring points 34B, 34C and coupled to the second translating assembly 46B. For example and without limitation, the translating assembly 46 can be a rail-mounted carrier attached to a motive force, such as motor, for moving the translating assembly back and forth along a rail. As another example, the translating assembly 46 can be a linear actuator, such as a hydraulic cylinder or a screw actuator, with a motive force coupled thereto for moving the translating assembly back and forth. Other examples of translating assemblies are contemplated.

The wind energy system 2 is shown in a first state of orientation in Figure 22. Such first state might take advantage of a particular wind direction that provides the greatest efficiency for the wind turbines coupled to the floating module 4 for the most amount of time, or otherwise suited to that particular wind direction. The translating assembly can be stationery to maintain such orientation. However, if the wind direction changes, the new wind direction may yield a smaller energy output from the wind energy system 2 due to turbulence from wind turbines in different rows or other locations on the floating module 4, and other factors affecting wind turbulence. To increase the efficiency or otherwise change the performance of the wind energy system 2, the rotation system 43 can change the orientation of the floating module 4. For example, comparing the illustrations between Figure 22 and Figure 23, the first translating assembly 46A translates to the right to change the tension of the lines connected to the two mooring points 34A, 34D. Specifically, the portion of the mooring line 36A would tighten and the portion of the mooring line 36D would loosen. Similarly, the second translating assembly 46B translates to the left. The movement in such direction allows the mooring line 36B to loosen while concurrently tightening the line 36C. The different tensions on the mooring lines through the catenary suspension described above effectively cause a reorientation of the floating module 4 to a second state of orientation in Figure 23 compared to a first state of orientation in Figure 22. Thus, the rotation system 43 with the translating assembly 46 twists the floating module to a new orientation.

Figure 24 is a top perspective view schematic diagram illustrating multiple floating modules of the wind energy system in a first state of orientation for a first wind direction. Figure 25 is a top perspective view schematic diagram illustrating multiple floating modules of the wind energy system in a second state of orientation for a second wind direction. The figures will be described in conjunction with each other. The wind energy system 2 includes a plurality of floating modules 4A, 4B, 4C, 4D, 4E, and 4F having a plurality wind turbines (not shown) coupled thereto. A multipoint mooring system, such as described above, can be coupled to the floating modules for securing the floating modules in a fixed location. The multipoint mooring system includes at least two mooring points disposed around the floating modules, having at least two mooring lines coupled thereto. In at least one system, the floating modules can be arranged and aligned to face a wind direction W1 to help maximize wind efficiencies of the wind energy system. The optimal wind direction can be determined through computer modelling and empirical studies. As the wind direction changes to a different direction W2, then the floating modules can be twisted to a different orientation to help improve the efficiency of each of the floating modules to the different wind direction. The multipoint mooring system restricts the maximum movement and differentiates the wind energy system from a single mooring point. However, benefits of a multipoint mooring system include among others, a significant stability and control over the movement.

Other and further embodiments utilizing one or more aspects of the inventions described above can be devised without departing from the scope of the claims. For example, different numbers of wind turbines and turbine spars can be used, different numbers of pairs of wind turbines with counter-rotating assemblies can be used, wind turbines can be mounted at different positions than shown, such as and without limitation between the turbine spars or stabilizer spars, and different sizes of wind turbines can be used at different positions on a given floating module. Other variations are possible.

Further, the various methods and embodiments of the wind turbine disclosure herein can be included in combination with each other to produce variations of the disclosed methods and embodiments. Discussion of singular elements can include plural elements and vice-versa. References to at least one item followed by a reference to the item may include one or more items. Also, various aspects of the embodiments could be used in conjunction with each other to accomplish the understood goals of the disclosure. Unless the context requires otherwise, the word "comprise" or variations such as "comprises" or "comprising," should be understood to imply the inclusion of at least the stated element or step or group of elements or steps or equivalents thereof, and not the exclusion of a greater numerical quantity or any other element or step or group of elements or steps or equivalents thereof. The device or system may be used in a number of directions and orientations. The term "coupled," "coupling," "coupler," and like terms are used broadly herein and may include any method or device for securing, binding, bonding, fastening, attaching, joining, inserting therein, forming thereon or therein, communicating, or otherwise associating, for example, mechanically, magnetically, electrically, chemically, operably, directly or indirectly with intermediate elements, one or more pieces of members together and may further include without limitation integrally forming one functional member with another in a unitary fashion. The coupling may occur in any direction, including rotationally.

The order of steps can occur in a variety of sequences unless otherwise specifically limited. The various steps described herein can be combined with other steps, interlineated with the stated steps, and/or split into multiple steps. Similarly, elements have been described functionally and can be embodied as separate components or can be combined into components having multiple functions.

The inventions have been described in the context of preferred and other embodiments and not every embodiment of the invention has been described. Obvious modifications and alterations to the described embodiments are available to those of ordinary skill in the art. The disclosed and undisclosed embodiments are not intended to limit or restrict the scope or applicability of the invention conceived of by the Applicant, but rather, in conformity with the patent laws, Applicant intends to protect fully all such modifications and improvements that come within the scope or range of equivalent of the following claims.

## Claims

1. A wind energy system (2), comprising:
a floating module (4) adapted to at least partially float in water;
at least one pair of vertical wind turbines (18) mounted on the floating module (4),
a multipoint mooring system (39) coupled between a seabed (40) and the floating module (4) having at least two mooring points (34), each having a mooring line (36) in catenary coupling between the floating module (4) and the seabed (40), the lines (36) being positioned at locations around the floating module (4) having the vertical wind turbines (18)
**characterized by** a first wind turbine (18) of the pair having a clockwise rotation and a second wind turbine (18) of the pair having a counter clockwise rotation as a counter-rotating arrangement to the first wind turbine (18), wherein the first wind turbine (18) is capable of operating at a different speed than the second wind turbine (18) to create a gyroscopic torque differential in the system around a centroid of the system, wherein said gyroscopic torque differential is allowed to twist the floating module to a new orientation.

2. The system (2) of claim 1, further comprising a rotation system (43) coupled with the floating module (4) and adapted to twist the floating module (4) relative to wind direction while the multipoint mooring system (39) is coupled between the seabed (40) and the floating module (4).

3. The system (2) of claim 2, wherein the rotation system (43) comprises the counter-rotating arrangement.

4. The system (2) of claim 2, wherein the rotation system (43) comprises at least one translating assembly (46) coupled to at least two mooring lines (36) disposed at multiple mooring points, the translating assembly (46) adapted to concurrently change a tension on the at least two mooring lines (36).

5. The system (2) of claim 2, wherein the rotation system (43) comprises at least one winch (44) coupled to at least one mooring line (36), the winch (44) being adapted to pull or release a length of the mooring line (36) coupled to the mooring point (34).

6. The system (2) of claim 1, wherein multiple pairs are coupled to the floating module (4), and wherein the wind turbines (18) are separated by direction of rotation into two groups, the groups being located on opposite sides of the floating module (4).

7. The system (2) of claim 1, wherein the vertical wind turbines (18) are coupled in rows on the floating module (4) with at least one row of wind turbines (18) offset in alignment from an adjacent row of wind turbines (18).

8. The system (2) of claim 1, wherein the vertical wind turbines (18) are coupled in rows on the floating module (4) with at least one row of wind turbines (18) stepped at a different height from an adjacent row of wind turbines (18).

9. The system of claim 2, wherein at least some of the mooring lines (36) are coupled between the floating module (4) and the seabed (40) in catenary suspension below the floating module (4), and wherein the catenary suspension biases the floating module (4) to a neutral state of orientation after the rotation system (43) has twisted the floating module from the neutral state.

10. A method of optimizing wind energy from a floating platform (4) having at least two vertical wind turbines (18) mounted on the platform (4) with a multipoint mooring system (39) having mooring lines securing the floating platform (4) at a location relative to a seabed (40), **characterized by**
allowing a pair of wind turbines (18) to counter-rotate in opposite directions from each other with a first wind turbine (18) of the pair having a clockwise rotation and a second wind turbine (18) of the pair having a counter-clockwise rotation, and allowing the first wind turbine (18) to operate at a different speed than the second wind turbine (18) to create a gyroscopic torque differential in the system around a centroid of the system;
and
twisting an orientation of the floating platform (4) from a first (39) state of orientation to a second state of orientation while the multipoint mooring system (39) is coupled between the seabed (40) and the floating platform (4), further comprising allowing the gyroscopic torque differential to twist the floating module (4) to a new orientation.

11. The method of claim 10, further comprising
tightening at least one mooring line (36) of the multipoint mooring system (39) ; and twisting the orientation of the floating platform (4) from a first state of orientation to a second state of orientation by the tightening of the least one mooring line (36).

12. The method of claim 11, wherein tightening at least one mooring line (36) comprises winching the line.

13. The method of claim 11, further comprising tightening a portion of at least one mooring line (36) while loosening another portion of the mooring line (36).

14. The method of claim 13, wherein tightening the portion of the at least one mooring line (36) comprises translating a connection of the mooring line (36) to a different location on the floating module.

## Patentansprüche

1. Windenergiesystem (2), welches aufweist:
ein schwimmendes Modul (4), das ausgebildet ist, zumindest teilweise in Wasser zu schwimmen;
zumindest ein Paar von vertikalen Windturbinen (18), das an dem schwimmenden Modul (4) befestigt ist,
ein Mehrpunkt-Verankerungssystem (39), das zwischen einen Seeboden (40) und das schwimmende Modul (4) gekoppelt ist, mit zumindest zwei Verankerungspunkten (34), die jeweils eine Verankerungsleine (36) in kettenförmiger Kopplung zwischen dem schwimmenden Modul (4) und dem Seeboden (40) haben, wobei die Leinen (36) an Stellen um das schwimmende Modul (4) mit den vertikalen Windturbinen (18) positioniert sind,
**gekennzeichnet durch** eine erste Windturbine (18) des Paares mit einer Drehung im Uhrzeitersinn und eine zweite Windturbine (18) des Paares mit einer Drehung entgegen dem Uhrzeigersinn als einer Anordnung mit einer der ersten Windturbine (18) entgegengesetzten Drehung, wobei die erste Windturbine (18) in der Lage ist, mit einer gegenüber der zweiten Windturbine (18) unterschiedlichen Geschwindigkeit zu arbeiten, um ein gyroskopisches Drehmomentdifferential um einen Schwerpunkt des Systems herum zu schaffen, wobei das gyroskopische Drehmomentdifferential in der Lage ist, das schwimmende Modul in eine neue Orientierung zu verdrehen.

2. System (2) nach Anspruch 1, weiterhin aufweisend ein Rotationssystem (43), das mit dem schwimmenden Modul (4) gekoppelt und ausgebildet ist, das schwimmende Modul (4) relativ zu der Windrichtung zu verdrehen, während das Mehrpunkt-Verankerungssystem (39) zwischen den Seeboden (40) und das schwimmende Modul (4) gekoppelt ist.

3. System (2) nach Anspruch 2, bei dem das Rotationssystem (43) die Anordnung zum entgegengesetzten Drehen aufweist.

4. System (2) nach Anspruch 2, bei dem das Rotationssystem (43) zumindest eine Versetzungsanordnung (46) aufweist, die mit zumindest zwei an mehreren Verankerungspunkten angeordneten Verankerungsleinen (36) gekoppelt ist, wobei die Versetzungsanordnung (46) ausgebildet ist, eine Spannung auf die zumindest zwei Verankerungsleinen (36) gleichzeitig zu ändern.

5. System (2) nach Anspruch 2, bei dem das Rotationssystem (43) zumindest eine Winde (44) aufweist, die mit zumindest einer Verankerungsleine (36) gekoppelt ist, wobei die Winde (44) ausgebildet ist, eine Länge der Verankerungsleine (36), die mit dem Verankerungspunkt (34) gekoppelt ist, zu ziehen oder freizugeben.

6. System (2) nach Anspruch 1, bei dem mehrere Paare mit dem schwimmenden Modul (4) gekoppelt sind, und bei dem die Windturbinen (18) durch die Drehrichtung in zwei Gruppen getrennt sind, wobei sich die Gruppen auf gegenüberliegenden Seiten des schwimmenden Moduls (4) befinden.

7. System (2) nach Anspruch 1, bei dem die vertikalen Windturbinen (18) in Reihen auf dem schwimmenden Modul (4) gekoppelt sind, wobei zumindest eine Reihe von Windturbinen (18) in der Ausrichtung von einer benachbarten Reihe von Windturbinen (18) versetzt ist.

8. System (2) nach Anspruch 1, bei dem die vertikalen Windturbinen (18) in Reihen auf dem schwimmenden Modul (4) gekoppelt sind, wobei zumindest eine Reihe von Windturbinen (18) in einer unterschiedlichen Höhe gegenüber einer benachbarten Reihe von Windturbinen (18) versetzt ist.

9. System nach Anspruch 2, bei dem zumindest einige der Verankerungsleinen (36) zwischen das schwimmende Modul (4) und den Seeboden (40) in kettenförmiger Aufhängung unter dem schwimmenden Modul (4) gekoppelt sind, und bei dem die kettenförmige Aufhängung das schwimmende Modul (4) in einen neutralen Orientierungszustand vorspannt, nachdem das Rotationssystem (43) das schwimmende Modul aus dem neutralen Zustand verdreht hat.

10. Verfahren zum Optimieren von Windenergie von einer schwimmenden Plattform (4) mit zumindest zwei vertikalen Windturbinen (18), die an der Plattform (4) befestigt sind, mit einem Mehrpunkt-Verankerungssystem (39) mit Verankerungsleinen, die die schwimmende Plattform (4) an einer Stelle relativ zu einem Seeboden (40) sichern, **gekennzeichnet durch**
Ermöglichen, dass ein Paar von Windturbinen (18) sich in zueinander entgegengesetzten Richtungen dreht, wobei eine erste Windturbine (18) des Paares eine Drehung im Uhrzeigersinn hat und eine zweite Windturbine (18) des Paares eine Drehung entgegen dem Uhrzeigersinn hat, und Ermöglichen, dass die erste Windturbine (18) mit einer gegenüber der zweiten Windturbine (18) unterschiedlichen Geschwindigkeit arbeitet, um ein gyroskopisches Drehmomentdifferential in dem System um einen Schwerpunkt des System herum zu schaffen;
und
Verdrehen einer Orientierung der schwimmenden Plattform (4) aus einem ersten (39) Orientierungszustand in einen zweiten Orientierungszustand, während das Mehrpunkt-Verankerungssystem (39) zwischen den Seeboden (40) und die schwimmende Plattform (4) gekoppelt ist, und weiterhin Ermöglichen, dass das gyroskopische Drehmomentdifferential das schwimmende Modul (4) in eine neue Orientierung verdreht.

11. Verfahren nach Anspruch 10, weiterhin aufweisend Straffen von zumindest einer Verankerungsleine (36) des Mehrpunkt-Verankerungssystems (39); und
Verdrehen der Orientierung der schwimmenden Plattform (4) aus einem ersten Orientierungszustand in einen zweiten Orientierungszustand durch das Straffen der zumindest einen Verankerungsleine (36).

12. Verfahren nach Anspruch 11, bei dem das Straffen von zumindest einer Verankerungsleine (36) das Aufhaspeln der Leine aufweist.

13. Verfahren nach Anspruch 11, weiterhin aufweisend das Straffen eines Teils von zumindest einer Verankerungsleine (36), während ein anderer Teil der Verankerungsleine (36) gelockert wird.

14. Verfahren nach Anspruch 13, bei dem das Straffen des Teils der zumindest einen Verankerungsleine (36) das Versetzen einer Verbindung der Verankerungsleine (36) zu einer verschiedenen Stelle an dem schwimmenden Modul aufweist.

## Revendications

1. Système éolien (12) comprenant :
un module flottant (4) adapté pour flotter au moins partiellement dans l'eau ;
au moins une paire d'éoliennes verticales (18) montées sur le module flottant (4),
un système d'amarrage à plusieurs points (39) couplé entre un fond marin (40) et le module flottant (4) ayant au moins deux points d'amarrage (34), ayant chacun une ligne d'amarrage (36) en caténaire se couplant entre le module flottant (4) et le fond marin (40), les lignes (36) étant positionnées à des emplacements autour du module flottant (4) ayant les éoliennes verticales (18),
**caractérisé par** une première éolienne (18) de la paire qui a une rotation dans le sens des aiguilles d'une montre et une seconde éolienne (18) de la paire qui a une rotation dans le sens inverse des aiguilles d'une montre sous la forme d'un agencement à rotation dans le sens inverse par rapport à la première éolienne (18), dans lequel la première éolienne (18) peut fonctionner à une vitesse différente de la seconde éolienne (18) afin de créer un différentiel de couple gyroscopique dans le système autour d'un centroïde du système, dans lequel ledit différentiel de couple gyroscopique est autorisé à faire tourner le module flottant vers une nouvelle orientation.

2. Système (2) selon la revendication 1, comprenant en outre un système de rotation (43) couplé avec le module flottant (4) et adapté pour faire tourner le module flottant (4) par rapport à la direction du vent alors que le système d'amarrage à plusieurs points (39) est couplé entre le fond marin (40) et le module flottant (4).

3. Système (2) selon la revendication 2, dans lequel le système de rotation (43) comprend l'agencement à rotation inverse.

4. Système (2) selon la revendication 2, dans lequel le système de rotation (43) comprend au moins un ensemble de translation (46) couplé à au moins deux lignes d'amarrage (36) disposées à plusieurs points d'amarrage, l'ensemble de translation (46) étant adapté pour modifier simultanément une tension sur les au moins deux lignes d'amarrage (36).

5. Système (2) selon la revendication 2, dans lequel le système de rotation (43) comprend au moins un treuil (44) couplé à au moins une ligne d'amarrage (36), le treuil (44) étant adapté pour tirer ou libérer une longueur de la ligne d'amarrage (36) couplée au point d'amarrage (34).

6. Système (2) selon la revendication 1, dans lequel plusieurs paires sont couplées au module flottant (4), et dans lequel les éoliennes (18) sont séparées, par le sens de rotation, en deux groupes, les groupes étant positionnés sur les côtés opposés du module flottant (4).

7. Système (2) selon la revendication 1, dans lequel les éoliennes verticales (18) sont couplées en rangées sur le module flottant (4) avec au moins une rangée d'éoliennes (18) décalées du point de vue de l'alignement d'une rangée adjacente d'éoliennes (18).

8. Système (2) selon la revendication 1, dans lequel les éoliennes verticales (18) sont couplées en rangées sur le module flottant (4) avec au moins une rangée d'éoliennes (18) étagées à une hauteur différente par rapport à une rangée adjacente d'éoliennes (18).

9. Système selon la revendication 2, dans lequel au moins certaines des lignes d'amarrage (36) sont couplés entre le module flottant (4) et le fond marin (40) en suspension caténaire au-dessous du module flottant (4), et dans lequel la suspension caténaire sollicite le module flottant (4) jusqu'à un état d'orientation neutre après que le système de rotation (43) a fait tourner le module flottant à partir de l'état neutre.

10. Procédé pour optimiser l'énergie éolienne à partir d'une plateforme flottante (4) ayant au moins deux éoliennes verticales (18) montées sur la plateforme (4) avec un système d'amarrage à plusieurs points (39) ayant des lignes d'amarrage fixant la plateforme flottante (4) à un emplacement par rapport à un fond marin (40), **caractérisé par** les étapes consistant à :
permettre à une paire d'éoliennes (18) de tourner en sens inverse dans des directions opposées l'une par rapport à l'autre avec une première éolienne (18) de la paire qui a une rotation dans le sens des aiguilles d'une montre et une seconde éolienne (18) de la paire qui a une rotation dans le sens inverse des aiguilles d'une montre, et permettant à la première éolienne (18) de fonctionner à une vitesse différente de la seconde éolienne (18) afin de créer un différentiel de couple gyroscopique dans le système autour d'un centroïde du système ; et
faire passer une orientation de la plateforme flottante (4) d'un premier état d'orientation (39) à un second état d'orientation alors que le système d'amarrage à plusieurs points (39) est couplé entre le fond marin (40) et la plateforme flottante (4), comprenant en outre l'étape consistant à permettre au différentiel de couple gyroscopique à faire tourner le module flottant (4) dans une nouvelle orientation.

11. Procédé selon la revendication 10, comprenant en outre les étapes consistant à :
serrer au moins une ligne d'amarrage (36) du système d'amarrage à plusieurs points (39) ; et
faire passer l'orientation de la plateforme flottante (4) d'un premier état d'orientation à un second état d'orientation par le serrage de la au moins une ligne d'amarrage (36).

12. Procédé selon la revendication 11, dans lequel l'étape consistant à serrer au moins une ligne d'amarrage (36) comprend l'étape consistant à actionner la ligne au treuil.

13. Procédé selon la revendication 11, comprenant en outre l'étape consistant à serrer une partie d'au moins une ligne d'amarrage (36) tout en desserrant une autre partie de la ligne d'amarrage (36).

14. Procédé selon la revendication 13, dans lequel l'étape consistant à serrer la partie de la au moins ligne d'amarrage (36) comprend l'étape consistant à translater un raccordement de la ligne d'amarrage (36) vers un emplacement différent sur le module flottant.
